# EUROPEAN PATENT SPECIFICATION

(11) **EP 2 468 105 B1**
(45) Date of publication and mention of the grant of the patent: **02.08.2017**
(21) Application number: 11195066.3
(22) Date of filing: 21.12.2011
(51) Int. Cl.: A22C 7/00

(54) **Meat press and method for pressing meat**
Fleischpresse und Verfahren zum Pressen von Fleisch
Presse pour la viande et procédé pour presser la viande

(30) Priority: 21.12.2010 IT BZ20100045
(43) Date of publication of application: 27.06.2012
(73) Proprietor: Eller S.r.l., 39022 Lagundo, Bolzano (IT)
(72) Inventor: Eller, Oswald, 39022 Lagundo, Bolzano (IT)
(74) Representative: Marchi, Paolo

(56) References cited:
- DE-A1- 2 825 084
- DE-A1- 19 539 247
- DE-U1- 8 226 184
- US-A- 4 941 379
- US-A1- 2008 160 893

## Description

The invention relates to a press and a corresponding pressing method for meat and other meat-based products, like e.g. hams, speck or sausages, in order to give them a predefined shape and section to facilitate their subsequent slicing and/or packaging.

From DE 20 2005 018 374 a meat press is known, in which pressure exerted on meat occurs along at least one pressing direction by means of the action of two moulds, oppositely movable so as to operate from two sides on the meat in order to reduce the pressure acting on both sides and with a greater deformation stroke, obtaining a gentler action on the structure of the fibers of the product undergoing compression and avoiding the destruction of such a structure.

DE 82 26 184 U1, which can be regarded as the closest prior art for the present invention, discloses an apparatus for processing meat. The meat to be processed is already inside a container and remains inside the container also in subsequent processing phases. The apparatus disclosed by DE 82 26 184 U1 is a discontinuous device, in which meat is subjected to pressing and vibration under vacuum conditions within an airtight vacuum chamber, in order to remove air pockets from the meat and improve the subsequent cooking phase.

The present invention sets out the task of implementing a meat press able to give meat a predefined shape and section to facilitate subsequent slicing and/or packaging, the meat press being further adapted not to destruct the fiber structure of the meat, respectively adapted to impart the required shape to the product without subjecting it to excessive pressures, moreover reducing the percentage of water contained in the product and the pressing time.

This task is accomplished by a meat press for a meat or meat-based product according to claim 1 and/or by a method for pressing a meat or meat-based product according to claim 14.

According to the invention, meat is subjected, during the step of compression and/or during the step of maintaining the pressure acting on the meat, along at least one direction of compression, to a massage performed through an oscillating movement and/or a vibrating movement. Said massage may be performed by the mould, by the form or by both of said elements, imparting thereto a reciprocating oscillating movement about one or more axes of oscillation and/or a vibrating movement. Moreover, the invention does not exclude that, for instance, the oscillating movement be performed by one or more moulds acting along different directions, whereas the vibrating movement may be performed by the form containing the product. Said movements, performed during the compression step and/or during the maintaining of the pressure acting on the product, entail that fiber structure be not destroyed, as a mutual sliding between fibers occurs without breaking of the same; in case of sausages, said massage fosters mutual sliding between minced meat elements, obtaining the required final shape over short times and without having to apply excessive pressures. Moreover, the pressing combined with the massage enables a remarkable reduction of water contained in the product and a processing without destruction of fiber structure.

The press according to the invention substantially comprises a base frame supporting a conveyor belt for the forms containing the product; the elements of the same conveyor belt can constitute the bottom and two opposite walls of the form, transversal to the feed direction of the belt, whereas the walls of the form, which are arranged in the feed direction of the belt, may be comprised of opposed fixed boards supported by the same frame between which the transversal walls move relative to the feed direction of the belt and projecting from said conveyor belt, without excluding that the forms be specific containers housed on the conveyor belt. On a top or bottom position, with respect to the conveyor belt passage, one or more pressing stations are supported by the same base frame. In case of a top position of the pressing stations, each of them is provided with a mould which is operable toward the underlying conveyor belt and penetrating, when the belt is still, between the walls of the form containing the product. In case of a bottom position of the pressing stations each of them acts on the form containing the product, raising it against the corresponding fixed mould arranged topwise.

Expediently, the pressing stations may be more than one in order to increase machine productivity and, in case, to be able to subject the same product even to more than one pressing, in case with pressure and massaging features identical to each other or different in times, pressure, type and intensity of massaging.

Expediently, the pressing according to the invention occurs vertically, preferably through a single cylinder, e.g. pneumatic. In case of a top positioning, it is connected to the mould through a support with a horizontal axis of oscillation, transversal to the direction of compression, whereas the oscillating movement and/or the vibrations are imparted by one or more pistons acting on the mould in a position spaced apart from the axis of hinging and basically parallel to the compression piston. By providing a multidirectional joint instead of the hinging of the mould, it is possible to perform oscillations and/or vibrations according to different axes.

In case of a bottom positioning of the pressing stations, the pressing and massaging cylinders bottomwise act on the bottom of the forms, raising them against the overhanging fixed moulds.

In order to compensate for the oscillating movements of the mould relative to the vertical walls of the form, so as to avoid product leakage, baffles of the oscillating or sliding type may be provided; said baffles, applied to the vertical surfaces of the mould, during mould oscillation are pushed toward the corresponding surfaces of the form, e.g. under the action of springs, retaining the product undergoing compression and massaging. To facilitate mould insertion in the form, the walls thereof with ejected movable baffles, in the form the side walls with movable baffles ejected from it may be provided, at the corresponding top corner, with a beveled edge acting as lead-in, in case provided with interchangeable rollers in a position further fostering mould penetration inside the form.

The press according to the invention allows the pressing of meat according to the following method, which is part of the invention:
- coupling and penetration between mould and form, subjecting the contained product to pressing,
- oscillation and/or vibration, monodirectional or multidirectional, of the mould and/or of the form during the step of compression and/or during the maintaining of the compression,
- in case, repetition of the preceding steps with identical or different compression values, times for maintaining the compression, the oscillation and/or vibration of the mould and/or the form, carried out on one or more successive compression stations;
- extraction of the mould from the fixed form, respectively detachment of the form from the fixed mould, following the last step of compression.

The invention does not exclude that the massage of the product may occur by subjecting to vibration and/or oscillation the entire form or at least one of the boards, respectively of the walls of the form, respectively of the mould, through suitable pistons or mechanically, e.g. by cams.

Press feeding and discharge of processed product from the machine can occur in a known way. Expediently, for safety and/or hygienic reasons the press can operate pneumatically.

The invention is explained in more detail on the basis of two examples of preferred embodiment of a meat press according to the invention, schematically illustrated in the annexed drawings which are purely by way of example and not for limitative purposes.

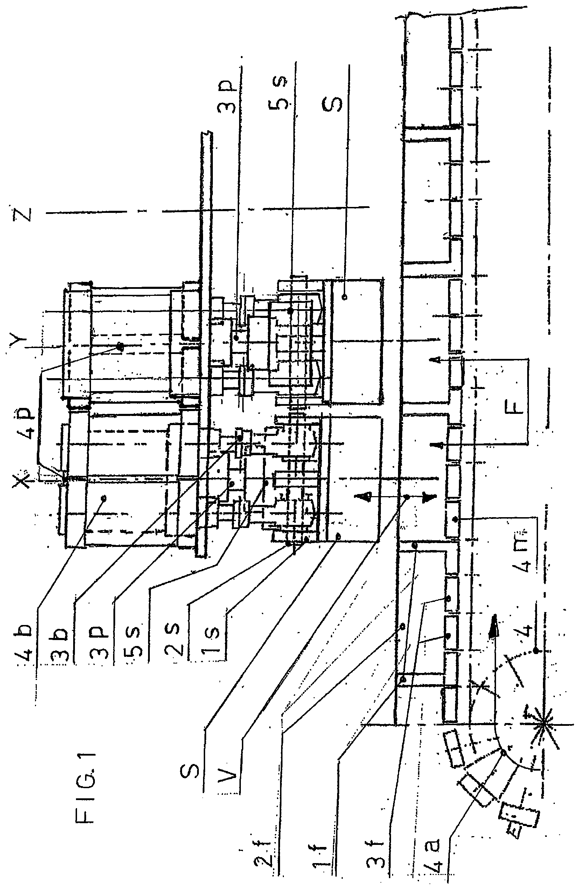

Fig. 1 schematically illustrates a side view of a meat press according to the invention, without illustration of the frame, with a horizontal conveyor belt provided with form walls transversal to the feed movement of the belt to retain the product, and with the walls arranged parallel to the belt motion which are fixedly supported on the frame at the two sides of the belt; above the conveyor belt three successive pressing stations are provided, with moulds vertically operated and oscillating about a horizontal axis parallel to the feed direction of the belt.

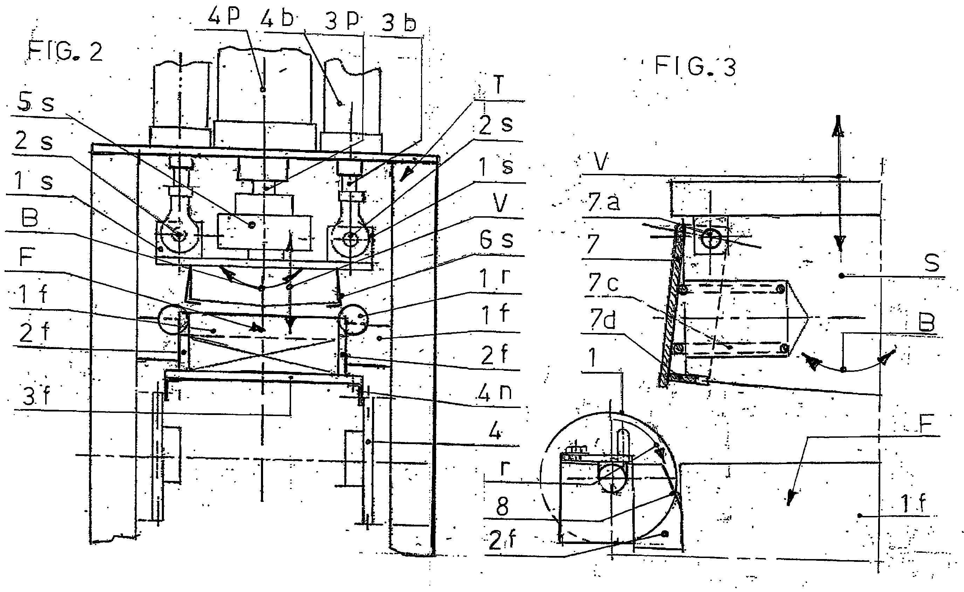

Fig. 2 schematically illustrates a partial side view of the press indicated in Fig. 1, with base frame and the mould provided with multidirectional joint, and with indication of the movable compensating baffles applied to the mould and of the lead-in device for said baffles in the step of mould penetration inside the form.
Fig. 3 schematically illustrates the detail of one of the movable compensating baffles provided on the mould, and of the lead-in device for the penetration of the mould with movable baffles inside the form.
Fig. 4 schematically illustrates in a side view a meat press according to the invention, with the pressing stations acting from the bottom upwards, bottomwise on the bottom of the forms containing the product, pushing them against corresponding overhanging fixed moulds.

The meat press according to the invention, illustrated in the drawings, is basically comprised of a base frame T onto which a conveyor belt 4n is supported, provided with elements 3f constituting the bottom of a series of forms F, whereas the elements 1f constitute the walls thereof, transversal to the feed 4a of the belt 4n. The forms F are completed by two elements 2f constituting the side walls 1t which are fixedly supported on the frame T; between said fixed walls 2f, arranged parallelly to the feed 4a of the belt 4n, the walls 1f, arranged transversal with respect to the feed 4a, slide. The belt 4n slides 4a on wheels 4, passing horizontally below three successive pressing stations X, Y, Z. Each pressing station is comprised of a mould S, which performs the pressing by advancing vertically V to penetrate inside the underlying form F containing the product to be pressed. Said pressing movement V is imparted by a vertical cylinder 4p with a piston 3p connected to the mould S through a multidirectional joint 5s. By means of vertical cylinders 4b and vertical pistons 3b positioned displaced relative to the cylinder 4p, an oscillating movement B and/or a vibrating movement is imparted to the mould S, the ends of the pistons 3b being engaged on the mould S through pins 2s and supports 1s projecting topwise from the mould S. The invention does not exclude that the multidirectional joint 5s be replaced by a hinge support having an axis of oscillation lying on a horizontal plane. To impart vibrations to the mould 6, a mechanical or pneumatic vibrator of known type may be provided inside the mould, e.g. with a cam or of the type for vibration of concrete. It is possible to apply a vibrator also to one or more of the walls 1f, 2f and/or to the bottom 3f of the form F. The invention does not exclude that the oscillating movement B be imparted to the mould S by the same pressing cylinders 4p; of course, in this case each mould S will be provided with at least two cylinders 3p. In order to guarantee containment of the product undergoing pressing inside the form F, not with standing the oscillation B of the mould S, the mould may be provided with side baffles 7, hinged 7a oscillating 7b and pushed in a projecting position by springs 7c. Said baffles 7 are provided with an appendage 7d, which slides into a corresponding seat provided on the front surface of the mould S. During oscillation B, the baffles 7 adhere with the lowermost corner always against the corresponding wall 2f of the form F, whereas the appendage 7d always seals against the front and side surface of the mould S, preventing product leakage. In order to allow penetration of the mould S inside the form F, on the walls 2f corresponding to the baffles 7, lead-in beveled edges 8 and/or interchangeable rollers 1r are provided which, as soon as the bottom end of the baffle 7 adheres, accompany the adhering baffle 7 with the rotation r of the rollers 1 r, compressing the ejection spring 7c, making the mould penetrate the mould, together with the baffle 7, inside the walls 2f of the form F.

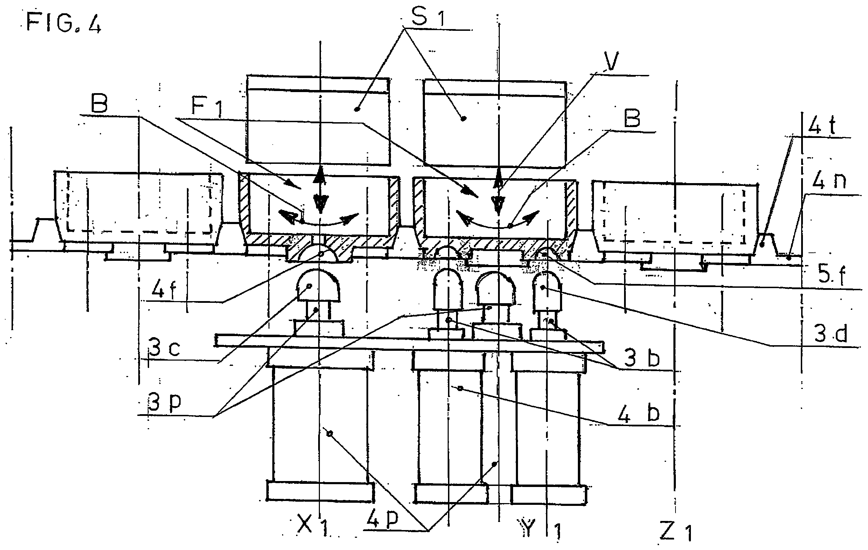

According to a further development of the inventive idea, the pressing and the massaging of the product can also be performed by raising V the forms F1 containing the product against the overhanging fixedly supported moulds S1 (Fig. 4). In this case, the forms F1 are supported vertically movable or housed on the conveyor belt 4n, in case provided with dragging elements 4t. The forms F1 in this case are basin-shaped and bottomwise have on their bottom a central cap-like seat 4f for housing the corresponding cap-like end 3c of the rod of the pressing piston, which is vertically sliding V inside the cylinder 4p. In positions displaced relative to said seat 4f, at least two cap-like seats 5f are provided for the cap-like ends 3d of the pistons 3b which slide inside the cylinders 4b and serve to impart an oscillating movement B and/or a vibrating movement to the form F1.

Through the press according to the invention the product may undergo compression and/or massage by oscillation and/or vibration several times at several pressing stations X, V, Z, respectively X1, Y1, Z1. However, the different pressing stations can also be exploited to improve machine productivity.

## Claims

1. A meat press for a meat or meat-based product, the meat press comprising a pressing station (X, Y, Z; X1, Y1, Z1) with at least one mould (S, S1) configured to penetrate (V) into a form (F1), said form (F, F1) being intended to contain the product to be pressed, wherein the pressing station (X, Y, Z; X1, Y1, Z1) is further configured to impart a massage to the product through an oscillating movement and/or a vibrating movement, wherein the meat press comprises a conveyor belt (4n) which is provided with a series of said forms (F, F1), the conveyor belt (4n) being adapted to convey a form (F, F1) of the series to an underlying position relative to said at least one mould (S, S1), so that said at least one mould (S, S1) can penetrate into the underlying form (F, F1) to shape the product contained in the underlying form (F, F1), wherein one among the mould (S, S1) and the underlying form (F, F1) is operated by pressing members (3p, 4p) towards the other among the mould (S, S1) and the underlying form (F, F1), said one among the mould (S, S1) and the underlying form (F, F1) being supported so as to be able to perform, during a step of gradual compression (V) of the product and/or during a step of maintaining compression and/or during a step of decompression of the product, an oscillating massage movement (B), along one axis or along different axes,
wherein the oscillating massage movement (B) is imparted by said pressing members (3p, 4p) which operate said one among the mould (S, S1) and the underlying form (F, F1) for compression of the product contained in the form (F, F1), or the oscillating massage movement (B) is imparted by specific operating members (4b, 3b) which operate on said one among the mould (S, S1) and the underlying form (F, F1),
and wherein said other among the mould (S, S1) and the underlying form (F, F1), which is not operated by said pressing members (3p, 4p), is fixedly supported.

2. The meat press according to claim 1, wherein said other among the mould (S, S1) and the underlying form (F, F1), which is not operated by the pressing members (3p, 4p), is subjected to the action of a vibrator.

3. The meat press according to claim 2, **characterised in that** the form (F) or one or more parts (1f, 2f, 3f) thereof are operated by a vibrator and **in that**, in this case, the pressing may be performed with or without oscillation (B) of the movable mould (S).

4. The meat press according to claim 2, **characterised in that** the fixedly supported mould (S1), or one or more parts thereof, are operated by a vibrator and **in that** in this case the pressing may be performed with or without oscillation (B) of the form (F1) which can be raised (V).

5. The meat press according to any one of claims 1 to 4, **characterised in that** the mould (S) operated vertically (V) and oscillating (B), or the fixedly supported mould (S1), is provided with oscillating (7b) side baffles (7) which are pushed into an ejected position by springs (7c) or equivalent members adapted to retain the product within the zones where, as a result of the oscillation (B) of the mould (S), or respectively of the form (F1), free through-spaces between the side walls of the mould (S, S1) and the corresponding boards of the form (F, F1) are formed.

6. The meat press according to any one of claims 1 to 5, **characterised in that** the same press may be provided with several successive pressing stations (X, Y, Z; X1, Y1, Z1) for subjecting the same product to several identical or different cycles of pressing and massaging.

7. The meat press according to any one of claims 1 to 6, wherein the forms (F, F1) are containers housed on the conveyor belt (4n).

8. The meat press according to any one of claims 1 to 6, wherein the bottom (3f) and two opposite walls (1f) of each of said forms (F) are constituted by elements (1f, 3f) of the conveyor belt (4n), said opposite walls (1f) being transversal to a feed direction (4a) of the conveyor belt (4n), the form (F) further comprising fixed walls (2f) which are arranged parallel to the feed direction (4a) of the conveyor belt (4n), the fixed walls (2f) being comprised of elements which are fixedly supported on a frame (T) supporting the conveyor belt (4n), wherein the transversal opposite walls (1f) project from the conveyor belt (4n) and are movable between said fixed walls (2f) relative to the feed direction (4a) of the conveyor belt (4n).

9. The meat press according to any one of claims 1 to 8, wherein the pressing station (X, Y, Z) comprises said at least one mould (S) and a vertical pressing cylinder (4p) with a pressing piston (3p) connected to the mould (S) through a hinge or a multidirectional joint (5s) defining an axis of hinging, the mould (S) being operated towards the underlying form (F) by the vertical pressing cylinder (4p), the pressing station (X, Y, Z) further comprising vertical operating cylinders (4b) with operating pistons (3b) which are spaced-apart from the vertical pressing cylinder (4p), the ends of the operating pistons (3b) being engaged on the mould (S) in positions spaced apart from the axis of hinging, the operating pistons (3b) being basically parallel to the pressing piston (3p), the vertical operating cylinders (4b) being configured to impart an oscillating movement and/or a vibrating movement to the mould (S).

10. The meat press according to any one of claims 1 to 8, wherein the pressing station (X, Y, Z) comprises said at least one mould (S) and at least two vertical pressing cylinders (4p), each vertical pressing cylinder (4p) having a respective pressing piston (3p) connected to the mould (S), the mould (S) being operated towards the underlying form (F) by said at least two vertical pressing cylinders (4p), said at least two vertical pressing cylinders (4p) being configured to impart also an oscillating movement and/or a vibrating movement to the mould (S).

11. The meat press according to any one of claims 1 to 7, wherein said at least one mould (S1) is fixedly supported in an overhanging position relative to the underlying form (F1), the pressing station (X1, Y1, Z1) comprising pressing and/or massaging cylinders (4p, 4b) configured to act on the bottom of said form (F1) and being adapted to raise said form (F1) against the overhanging fixed mould (S1) and to impart an oscillating movement and/or a vibrating movement to said form (F1).

12. The meat press according to claim 11, wherein the forms (F1) are supported vertically movable or housed on the conveyor belt (4n) provided with dragging elements (4t), the forms (F1) being basin-shaped and having bottomwise on their bottom a central cap-like seat (4f) and at least two spaced-apart cap-like seats (5f) which are displaced relative to the central cap-like seat (4f), the central cap-like seat (4f) being adapted to house a corresponding cap-like end (3c) of the pressing piston of a pressing cylinder (4p), each spaced-apart cap-like seat (5f) being adapted to house a cap-like end (3d) of the massaging piston (3b) of a respective massaging cylinder (4b).

13. The meat press according to any one of claims 8 to 12, wherein the mould (S, S1) comprises oscillating side baffles (7), which are applied to vertical surfaces of the mould (S, S1) and are pushed to a projecting position by springs (7c), the side baffles (7) being configured to be pushed toward corrrisponding surfaces of the form (F, F1) during oscillation of the mould (S) or of the form (F1), so retaining the product undergoing compression and massaging, to prevent product leakage.

14. A method for pressing a meat or meat-based product to shape the product and reduce the water content of the product, comprising the steps of:
- using a meat press according to any one of claims 1 to 13;
- providing a meat or meat-based product into said at least one form (F, F1);
- positioning said form (F, F1) into an underlying position relative to said at least one mould (S, S1), the form (F, F1) being conveyed to said underlying position by the conveyor belt (4n);
- operating one among the mould (S, S1) and the underlying form (F, F1) towards the other among the mould (S, S1) and the underlying form (F, F1), so that the mould (S, S1) penetrates into the underlying form (F, F1);
- increasing the compression of the product, followed by a step of maintaining the maximum pressure and a step of releasing the compression;
- subjecting the product undergoing pressing also to a massaging action caused by the oscillating movement (B) and/or by the vibrating movement of the same one among the mould (S) and the underlying form (F1) that is operated towards the other one,
wherein the step of subjecting the product to a massaging action takes place:
- exclusively during all or a part of the step of increasing the compression until the maximum pressure value is reached, or
- exclusively during all or a part of the step of maintaining the compression, or
- exclusively during all or a part of the step of decompression, or
- during all or a part of the preceding processing steps.

15. The method according to claim 14, **characterised in that** pressing and massaging of the product are performed by means of more than one cycle of compression and maintaining the maximum pressure, on a single pressing station or on different successive pressing stations (X, Y, Z; X1, Y1, Z1), and **in that** said cycles may be identical or different in terms of the time for gradual compression, maintaining the compression, decompression and/or massaging, in terms of pressure values, in terms of intensity and massaging time and in terms of type of massaging action.

16. The meat press according to any one of claims 1 to 13, wherein the elements of the conveyor belt can constitute bottom and two opposite walls of the form, transversal to a feed direction of the belt, whereas the walls of the form, which are arranged in the feed direction of the belt, may be comprised of opposed fixed boards supported by the same frame between which the transversal walls move relative to the feed direction of the belt and projecting from said conveyor belt, without excluding that the forms be specific containers housed on the conveyor belt.

## Patentansprüche

1. Fleischpresse für ein Fleisch- oder Fleisch-basiertes Produkt, wobei die Fleischpresse eine Pressstation (X, Y, Z; X1, Y1, Z1) mit mindestens einer Stempelform (S, S1), die derart ausgebildet ist, dass sie in eine Form (F1) eindringt, umfasst, wobei die Form (F, F1) das zu pressende Produkt enthalten soll, wobei die Pressstation (X, Y, Z; X1, Y1, Z1) weiter so gestaltet ist, um das Produkt durch eine oszillierende Bewegung und/oder eine vibrierende Bewegung zu kneten, wobei die Fleischpresse ein Förderband (4n) umfasst, welches mit einer Serie von den Formen (F, F1) ausgestattet ist, wobei das Förderband (4n) angepasst ist, um eine Form (F, F1) der Serie an eine relativ zu der mindestens einen Stempelform (S, S1) darunterliegende Position zu befördern, so dass die mindestens eine Stempelform (S, S1) in die darunterliegende Form (F, F1) eindringen kann, um das in der darunterliegenden Form (F, F1) enthaltene Produkt zu formen, wobei eine von der Stempelform (S, S1) und der darunterliegenden Form (F, F1) durch Presselemente (3p, 4p) zu der anderen Stempelform (S, S1) und der darunterliegenden Form (F, F1) betätigt wird, wobei diese eine Stempelform (S, S1) und die darunterliegende Form (F, F1) so gestützt werden, dass sie in der Lage sind, während eines Schrittes der graduellen Kompression (V) des Produkts und/oder während eines Schrittes einer anhaltenden Kompression und/oder während eines Schrittes der Dekompression des Produkts eine oszillierende Knetbewegung (B) entlang einer Achse oder entlang verschiedener Achsen durchzuführen, wobei die oszillierende Knetbewegung (B) durch die Pressmittel (3p, 4p) übertragen wird, welche diese eine der Stempelformen (S, S1) und die darunterliegende Form (F, F1) für die Kompression des Produktes, welches in der Form (F, F1) enthalten ist, betätigen, oder die oszillierende Knetbewegung (B) wird durch spezifische Betätigungsmittel (4b, 3b) übertragen, welche diese eine der Stempelform (S, S1) und die darunterliegende Form (F, F1) betätigen und wobei die andere der Stempelform (S, S1) und die darunterliegende Form (F, F1), welche nicht durch diese Pressmittel (3p, 4p) betätigt wird, feststehend gestützt wird.

2. Fleischpresse gemäß Anspruch 1, wobei die andere der Stempelform (S, S1) und die darunterliegende Form (F, F1), welche nicht durch die Pressmittel (3p, 4p) betätigt wird, der Betätigung eines Rüttlers unterzogen wird.

3. Fleischpresse gemäß Anspruch 2, dadurch charakterisiert, dass die Form (F) oder eine oder mehrere Teile (1f, 2f, 3f) davon durch einen Rüttler betätigt werden und dass in diesem Fall das Pressen mit oder ohne Oszillation (B) der beweglichen Stempelform (S) durchgeführt werden kann.

4. Fleischpresse gemäß Anspruch 2, **dadurch gekennzeichnet, dass** die feststehend gestützte Stempelform (S1) oder eine oder mehrere Teile davon durch einen Rüttler betätigt werden und dass in diesem Fall das Pressen mit oder ohne Oszillation (B) der Form (F1), welche angehoben werden kann (V) durchgeführt werden kann.

5. Fleischpresse nach einem der Ansprüche 1-4, **dadurch gekennzeichnet, dass** die Stempelform (S), welche vertikal (V) oder oszillierend (B) betätigt wird oder dass die feststehend gestützte Stempelform (S1) mit oszillierenden (7b) Seitenblechen (7), welche durch Federn (7c) in eine ausgestoßene Position gedrückt werden, versehen sind oder mit äquivalenten Elementen, welche angepasst sind, um das Produkt innerhalb der Zonen zu halten, wo aufgrund der Oszillation (B) der Stempelform (S) bzw. der Form (F1) freie Durchgangsräume zwischen den Seitenwänden der Stempelform (S, S1) und den korrespondierenden Platten der Form (F, F1) gebildet werden.

6. Fleischpresse gemäß einem der Ansprüche 1-5, **dadurch gekennzeichnet, dass** dieselbe Presse mit mehreren aufeinanderfolgenden Pressstationen (X, Y, Z; X1, Y1, Z1) bereitgestellt wird, um dasselbe Produkt mehreren identischen oder unterschiedlichen Press- und Knetzyklen zu unterziehen.

7. Fleischpresse gemäß einem der Ansprüche 1-6, wobei die Formen (F, F1) Behälter sind, die auf dem Förderband (4n) angeordnet sind.

8. Fleischpresse gemäß einem der Ansprüche 1-6, wobei der Boden (3f) und zwei gegenüberliegende Wandungen (1f) von jeder der Formen (F) durch Elemente (1f, 3f) des Förderbands (4n) ausgebildet sind, wobei die gegenüberliegenden Wandungen (1f) transversal zur Einspeisungsrichtung (4a) des Förderbands (4n) sind, wobei die Form (F) weiter feststehende Wandungen (2f) umfasst, welche parallel zu der Einspeisungsrichtung (4a) des Förderbands (4n) angeordnet sind, wobei die feststehenden Wandungen (2f) aus Elementen zusammengesetzt sind, welche feststehend auf einen Rahmen (T) das Förderband (4n) stützen, wobei die transversal gegenüberliegenden Wandungen (1f) von dem Förderband (4n) hervorragen und relativ zu der Einspeisungsrichtung (4a) des Förderbands (4n) beweglich auf den feststehenden Wandungen (2f) fixiert sind.

9. Fleischpresse gemäß einem der Ansprüche 1-8, wobei die Pressstation (X, Y, Z) die mindestens eine Form (S) und einen Vertikalpresszylinder (4p) mit einem Presskolben (3p) umfasst, welcher mit der Stempelform (S) durch ein Scharnier oder ein multidirektionales Gelenk (5s), welches eine Schwenkachse definiert, verbunden ist, wobei die Stempelform (S) bezüglich der darunterliegenden Form (F) durch den Vertikalpresszylinder (4p) betätigt wird, wobei die Pressstation (X, Y, Z) weiter vertikal operierende Zylinder (4b) mit operierenden Kolben (3b) umfasst, welche von dem vertikalen Presszylinder (4p) beabstandet sind, wobei die Enden der operierenden Kolben (3b) auf die Stempelform (S) in Positionen angreifen, welche von der Schwenkachse beabstandet sind, wobei die operierenden Kolben (3b) grundsätzlich parallel zu dem Presskolben (3p) sind, wobei die vertikal operierenden Zylinder (4b) so ausgebildet sind, um eine oszillierende Bewegung und/oder eine vibrierende Bewegung auf die Stempelform (S) zu übertragen.

10. Fleischpresse nach einem der Ansprüche 1-8, wobei die Pressstation (X, Y, Z) die mindestens eine Fo Stempelform (S) und mindestens zwei Vertikalpresszylinder (4p) umfasst, wobei jeder Vertikalpresszylinder (4p) einen entsprechenden Presskolben (3p) aufweist, welcher mit der Stempelform (S) verbunden ist, wobei die Stempelform (S) in Richtung der darunterliegenden Form (F) durch die mindestens zwei Vertikalpresszylinder (4p) betätigt wird, wobei die mindestens zwei Vertikalpresszylinder (4p) so ausgebildet sind, dass sie auch eine oszillierende Bewegung und/oder eine vibrierende Bewegung auf die Stempelform (S) übertragen.

11. Fleischpresse nach einem der Ansprüche 1-7, wobei die mindestens eine Stempelform (S1) in einer relativ zu der darunterliegenden Form (F1) überhängenden Position feststehend gestützt ist, wobei die Pressstation (X1, Y1, Z1) Press- und/oder Knetzylinder (4p, 4b) umfasst, welche so ausgebildet sind, dass sie auf dem Boden der Form (F1) wirken und welche so angepasst sind, dass sie die Form (F1) gegen die überhängende feststehende Stempelform (S1) anheben und eine oszillierende Bewegung und/oder eine vibrierende Bewegung auf die Form (F1) übertragen.

12. Fleischpresse nach Anspruch 11, wobei die Formen (F1) vertikal beweglich gestützt sind oder auf dem mit Zugelementen (4t) ausgestatteten Förderband (4n) angeordnet sind, wobei die Formen (F1) beckenförmig sind und unterseitig einen zentralen kappenartige Sitz (4f) haben und mindestens zwei voneinander beabstandete kappenähnliche Sitze (5f), welche relativ zu dem zentralen kappenähnlichen Sitz (4f) versetzt sind, wobei der zentrale kappenartige Sitz (4f) ausgebildet ist, um ein entsprechendes kappenartiges Ende (3c) des Presskolbens eines Presszylinders (4p) aufzunehmen, wobei jeder beabstandete kappenartige Sitz (5f) ausgebildet ist, um ein kappenähnliches Ende (3d) des Knetkolbens (3b) eines entsprechenden Knetzylinders (4b) aufzunehmen.

13. Fleischpresse nach einem der Ansprüche 8-12, wobei die Form (S, S1) oszillierende Seitenbleche (7) umfasst, welche auf die vertikalen Oberflächen der Formen (S, S1) angebracht werden und durch Federn (7c) in eine hervorragende Position gedrückt werden, wobei die Seitenbleche (7) ausgebildet sind, um in Richtung der entsprechenden Oberflächen von der Form (F, F1) während der Oszillation der Stempelform (S) oder der Form (F1) gedrückt zu werden und so das Produkt, welches der Kompression und dem Kneten unterzogen wird, zurückhält, um ein Auslaufen des Produkts zu verhindern.

14. Verfahren zum Pressen eines Fleisch- oder Fleisch-basierten Produkts, um das Produkt zu formen und den Wassergehalt des Produkts zu reduzieren, umfassend die Schritte:
- Verwenden einer Fleischpresse gemäß einem der Ansprüche 1-13;
- Bereitstellen eines Fleisch- oder Fleisch-basierten Produkts für die mindestens eine Form (F, F1);
- Positionieren dieser Form (F, F1) in eine darunterliegende Position relativ zu der mindestens einen Stempelform (S, S1), wobei die Form (F, F1) zu der darunterliegenden Position durch das Förderband (4n) befördert wird;
- Betätigen von einer der Stempelformen (S, S1) und der darunterliegenden Form (F, F1) in Richtung der anderen von der Stempelform (S, S1) und der darunterliegenden Form (F, F1), so dass die Stempelform (S, S1) in die darunterliegende Form (F, F1) eindringt;
- Erhöhen der Kompression des Produkts gefolgt von einem Schritt des Aufrechterhaltens des maximalen Drucks und eines Schritts des Lösens der Kompression;
- das Produkt, welches gepresst wird, wird einer Knetbehandlung unterzogen, welche durch die oszillierende Bewegung (B) und/oder durch die vibrierende Bewegung derselben einen Stempelform (S) und der darunterliegenden Form (F1), welche in Richtung der anderen betätigt wird, verursacht wird,
wobei der Schritt das Produkt einer Knetbehandlung zu unterziehen stattfindet:
- ausschließlich während des gesamten oder eines Teils des Schrittes der Kompressionserhöhung, bis der maximale Druckwert erreicht ist, oder
- ausschließlich während des gesamten oder eines Teils des Schrittes der Aufrechterhaltung der Kompression oder
- ausschließlich während des gesamten oder eines Teils des Schrittes der Dekompression oder
- während des gesamten oder eines Teils des vorhergehenden Verfahrensschritts.

15. Verfahren gemäß Anspruch 14, **dadurch gekennzeichnet, dass** das Pressen und Kneten des Produkts mit mehr als einem Zyklus der Kompression und des Aufrechterhaltens des maximalen Druckes auf einer einzelnen Pressstation oder auf verschiedenen aufeinanderfolgenden Pressstationen (X, Y, Z; X1, Y1, Z1) durchgeführt wird und dass die Zyklen identisch oder unterschiedlich sein können hinsichtlich der Zeit für die graduelle Kompression, für das Aufrechterhalten der Kompression, für die Dekompression und/oder das Kneten, hinsichtlich der Druckwerte, hinsichtlich der Intensität und Knetzeit und hinsichtlich der Art der Knetbehandlung.

16. Fleischpresse gemäß einem der Ansprüche 1-13, wobei die Elemente des Förderbandes einen Boden und zwei gegenüberliegende Wandungen der Form transversal zu der Einspeiserichtung des Bandes bilden können, wohingegen die Wandungen der Form, welche in der Einspeiserichtung des Bandes angeordnet sind, aus gegenüberliegenden feststehenden Platten zusammengesetzt sein können, welche durch denselben Rahmen gestützt sind, zwischen welchen sich die transversalen Wandungen bewegen relativ zu der Einspeiserichtung des Bandes und welche von diesem Förderband hervorragen, ohne auszuschließen, dass die Formen spezifische Behälter sind, welche auf dem Förderband angeordnet sind.

## Revendications

1. Presse à viande pour une viande ou un produit à base de viande, la presse à viande comprenant une station de pressage (X, Y, Z ; X1, Y1, Z1) avec au moins un moule (S, S1) configuré pour pénétrer (V) dans une forme (F1), ladite forme (F,F1) étant prévue pour contenir le produit à presser, dans laquelle la station de pressage (X, Y, Z ; X1, Y1, Z1) est en outre configurée pour communiquer un massage au produit par le biais d'un mouvement oscillatoire et/ou d'un mouvement vibratoire,
dans laquelle :
la presse à viande comprend une courroie transporteuse (4n) qui est prévue avec une série desdites formes (F, F1), la courroie transporteuse (4n) étant adaptée pour transporter une forme (F, F1) de la série jusqu'à une position sous-jacente par rapport audit au moins un moule (S, S1), de sorte que ledit au moins un moule (S, S1) peut pénétrer dans la forme sous-jacente (F, F1) pour former le produit contenu dans la forme sous-jacente (F, F1),
dans laquelle :
l'un parmi le moule (S, S1) et la forme (F, F1) sous-jacente est actionné par des éléments de pressage (3p, 4p) vers l'autre parmi le moule (S, S1) et la forme (F, F1) sous-jacente, ledit un parmi le moule (S, S1) et la forme (F, F1) sous-jacente étant supporté afin de pouvoir réaliser, pendant une étape de compression progressive (V) du produit et/ou pendant une étape de compression de maintien et/ou pendant une étape de décompression du produit, un mouvement de massage oscillatoire (B), le long d'un axe ou le long de différents axes,
dans laquelle le mouvement de massage oscillatoire (B) est communiqué par lesdits éléments de pressage (3p, 4p) qui actionnent ledit un parmi le moule (S, S1) et la forme (F, F1) sous-jacente pour la compression du produit contenu dans la forme (F, F1) ou le mouvement de massage oscillatoire (B) est communiqué par des éléments d'actionnement spécifiques (4b, 3b) qui actionnent ledit un parmi le moule (S, S1) et la forme (F, F1) sous-jacente,
et dans laquelle ledit autre parmi le moule (S, S1) et la forme (F, F1) sous-jacente, qui n'est pas actionné par lesdits éléments de pressage (3p, 4p), est supporté de manière fixe.

2. Presse à viande selon la revendication 1, dans laquelle ledit autre parmi le moule (S, S1) et la forme (F, F1) sous-jacente qui n'est pas actionné par les éléments de pressage (3p, 4p), est soumis à l'action d'un vibrateur.

3. Presse à viande selon la revendication 2, **caractérisée en ce que** la forme (F) ou une ou plusieurs de ses parties (1f, 2f, 3f) sont actionnées par un vibrateur et **en ce que**, dans ce cas, le pressage peut être réalisé avec ou sans oscillation (B) du moule mobile (S).

4. Presse à viande selon la revendication 2, **caractérisée en ce que** le moule (S1) supporté de manière fixe, ou une ou plusieurs de ses parties, sont actionnés par un vibrateur et **en ce que**, dans ce cas, le pressage peut être réalisé avec ou sans oscillation (B) de la forme (F1) qui peut être levée (V).

5. Presse à viande selon l'une quelconque des revendications 1 à 4, **caractérisée en ce que** le moule (S) actionné verticalement (V) et oscillant (B), ou le moule (S1) supporté de manière fixe, est prévu avec des déflecteurs latéraux (7) oscillants (7b) qui sont poussés dans une position éjectée par des ressorts (7c) ou des éléments équivalents adaptés pour retenir le produit à l'intérieur des zones où, suite à l'oscillation (B) du moule (S) ou respectivement de la forme (F), des espaces débouchants libres entre les parois latérales du moule (S, s1) et les plaques correspondantes dans la forme (F, F1), sont formés.

6. Presse à viande selon l'une quelconque des revendications 1 à 5, **caractérisée en ce que** la même presse peut être prévue avec plusieurs stations de pressage (X, Y, Z ; X1, Y1, Z1) successives pour soumettre le même produit à plusieurs cycles de pressage et de massage identiques ou différents.

7. Presse à viande selon l'une quelconque des revendications 1 à 6, dans laquelle les formes (F, F1) sont des récipients logés sur la courroie transporteuse (4n).

8. Presse à viande selon l'une quelconque des revendications 1 à 6, dans laquelle le fond (3f) et deux parois (1f) opposées de chacune desdites formes (F) sont constitués par des éléments (1f, 3f) de la courroie transporteuse (4n), lesdites parois (1f) opposées étant transversales par rapport à une direction d'alimentation (4a) de la courroie transporteuse (4n), la forme (F) comprenant en outre des parois fixes (2f) qui sont agencées parallèlement à la direction d'alimentation (4a) de la courroie transporteuse (4n), les parois fixes (2f) étant composées d'éléments qui sont supportés, de manière fixe, sur un bâti (T) supportant la courroie transporteuse (4n), dans laquelle les parois (1f) opposées transversales font saillie de la courroie transporteuse (4n) et sont mobiles entre lesdites parois fixes (2f) par rapport à la direction d'alimentation (4a) de la courroie transporteuse (4n).

9. Presse à viande selon l'une quelconque des revendications 1 à 8, dans laquelle la station de pressage (X, Y, Z) comprend ledit au moins un moule (S) et un cylindre de pressage vertical (4p) avec un piston de pressage (3p) raccordé au moule (S) par le biais d'une charnière ou d'un joint multidirectionnel (5s) définissant un axe de charnière, le moule (S) étant actionné vers la forme (F) sous-jacente par le cylindre de pressage vertical (4p), la station de pressage (X, Y, Z) comprenant en outre des cylindres d'actionnement verticaux (4b) avec des pistons d'actionnement (3b) qui sont espacés du cylindre de pressage vertical (4p), les extrémités des pistons d'actionnement (3b) étant mises en prise sur le moule (S) dans des positions espacées de l'axe de charnière, les pistons d'actionnement (3b) étant fondamentalement parallèles au piston de pressage (3p), les cylindres d'actionnement verticaux (4b) étant configurés pour communiquer un mouvement oscillatoire et/ou un mouvement vibratoire au moule (S).

10. Presse à viande selon l'une quelconque des revendications 1 à 8, dans laquelle la station de pressage (X, Y, Z) comprend ledit au moins un moule (S) et au moins deux cylindres de pressage verticaux (4p), chaque cylindre de pressage vertical (4p) ayant un piston de pressage (3p) respectif raccordé au moule (S), le moule (S) étant actionné vers la forme sous-jacente (F) par lesdits au moins deux cylindres de pressage verticaux (4p), lesdits au moins deux cylindres de pressage verticaux (4p) étant configurés pour communiquer également un mouvement oscillatoire et/ou un mouvement vibratoire au moule (S).

11. Presse à viande selon l'une quelconque des revendications 1 à 7, dans laquelle ledit au moins un moule (S1) est supporté, de manière fixe, dans une position en saillie par rapport à la forme (F1) sous-jacente, la station de pressage (X1, Y1, Z1) comprenant des cylindres de pressage et/ou de massage (4p, 4b) configurés pour agir sur le fond de ladite forme (F1) et étant adaptés pour lever ladite forme (F1) contre le moule fixe en saillie (S1) et pour communiquer un mouvement oscillatoire et/ou un mouvement vibratoire à ladite forme (F1).

12. Presse à viande selon la revendication 11, dans laquelle les formes (F1) sont supportées de manière verticalement mobiles ou logées sur la courroie transporteuse (4n) prévue avec des éléments de traînée (4t), les formes (F1) étant en forme de cuvette et ayant, dans le sens du fond, sur leur fond, un siège central en forme de capuchon (4f) et au moins deux sièges en forme de capuchon (5f) espacés qui sont déplacés par rapport au siège central en forme de capuchon (4f), le siège central en forme de capuchon (4f) étant adapté pour loger une extrémité en forme de capuchon (3c) correspondante du piston de pression d'un cylindre de pression (4p), chaque siège en forme de capuchon (5f) espacé étant adapté pour loger une extrémité en forme de capuchon (3d) du piston de massage (3b) d'un cylindre de massage (4b) respectif.

13. Presse à viande selon l'une quelconque des revendications 8 à 12, dans laquelle le moule (S, S1) comprend des déflecteurs latéraux oscillants (7) qui sont appliqués sur des surfaces verticales du moule (S, S1) et sont poussés dans une position en saillie par des ressorts (7c), les déflecteurs latéraux (7) étant configurés pour être poussés vers des surfaces correspondantes de la forme (F, F1) pendant l'oscillation du moule (S) ou de la forme (F1), retenant ainsi le produit subissant la compression et le massage, pour empêcher la fuite du produit.

14. Procédé pour presser une viande ou un produit à base de viande pour former le produit et réduire la teneur en eau du produit, comprenant les étapes suivantes :
utiliser une presse à viande selon l'une quelconque des revendications 1 à 13 ;
prévoir une viande ou un produit à base de viande dans ladite au moins une forme (F, F1) ;
positionner ladite forme (F, F1) dans une position sous-jacente par rapport audit au moins un moule (S, S1), la forme (F, F1) étant transportée vers ladite position sous-jacente par la courroie transporteuse (4n) ;
actionner un parmi le moule (S, S1) et la forme (F, F1) sous-jacente vers l'autre parmi le moule (S, S1) et la forme (F, F1) sous-jacente, de sorte que le moule (S, S1) pénètre dans la forme (F, F1) sous-jacente ;
augmenter la compression du produit, suivi par une étape de maintien de la pression maximum et une étape de libération de la compression ;
soumettre le produit subissant le pressage également à une action de massage provoquée par le mouvement oscillatoire (B) et/ou par le mouvement vibratoire de l'un parmi le moule (S) et la forme (F1) sous-jacente qui est actionnée vers l'autre,
dans lequel l'étape suivante : soumettre le produit à une action de massage a lieu :
exclusivement pendant la totalité ou une partie de l'étape d'augmentation de compression jusqu'à ce que la valeur de pression maximum soit atteinte, ou bien
exclusivement pendant la totalité ou une partie de l'étape de maintien de compression, ou bien
exclusivement pendant la totalité ou une partie de l'étape de décompression, ou bien
pendant la totalité ou une partie des étapes de traitement précédentes.

15. Procédé selon la revendication 14, **caractérisé en ce que** le pressage et le massage du produit sont réalisés au moyen de plus d'un cycle de compression et de maintien de la pression maximum, sur une seule station de pressage ou sur différentes stations de pressage (X, Y, Z ; X1, Y1, Z1) successives et **en ce que** lesdits cycles peuvent être identiques ou différents en termes de temps pour la compression progressive, le maintien de compression, la décompression et/ou le massage, en termes de valeurs de pression, en termes d'intensité et de temps de massage et en termes de type d'action de massage.

16. Presse à viande selon l'une quelconque des revendications 1 à 13, dans laquelle les éléments de la courroie transporteuse peuvent constituer le fond et deux parois opposées de la forme, transversales par rapport à une direction d'alimentation de la courroie, alors que les parois de la forme, qui sont agencées dans la direction d'alimentation de la courroie, peuvent être composées de plaques fixes opposées supportées par le même bâti entre lesquelles les parois transversales se déplacent par rapport à la direction d'alimentation de la courroie, et faisant saillie de ladite courroie transporteuse, sans exclure que les formes sont des récipients spécifiques logés sur la courroie transporteuse.
